# EUROPEAN PATENT APPLICATION

(11) **EP 4 434 664 A1**
(43) Date of publication of application: **25.09.2024**
(21) Application number: 24165683.4
(22) Date of filing: 22.03.2024
(51) Int. Cl.: B23K 9/12, B23K 9/133, B23K 9/173

(54) **SYSTEMS AND METHODS FOR UTILIZING IN-LINE WIRE FEEDERS**

(30) Priority: 24.03.2023 US 202363454518 P; 21.03.2024 US 202418612038
(71) Applicant: Illinois Tool Works Inc., Glenview IL 60025 (US)
(72) Inventor: MARCUSEN, David, Glenview, 60025 (US); LEITERITZ, Nathan, Glenview, 60025 (US); THOVARAYI, Suneesh, Glenview, 60025 (US); SICKELS, Darrell, Glenview, 60025 (US)
(74) Representative: HGF

(57) **Abstract**

Systems and methods are provided for utilizing in-line wire feeders. A welding-type system may include an in-line wire feeder device configured to feed electrode wire from a wire source. The in-line wire feeder device may include an in-line wire feeding mechanism, may be a physically separate component from both of a second wire feeder device and a welding-type torch, and may be connected in series with the second wire feeder device. The in-line wire feeder device may control feeding of the electrode wire from a wire source, with the controlling including causing the second wire feeder device to feed the electrode wire from the wire source until the electrode wire reaches the in-line wire feeding mechanism, and then afterwards deactivating at least a feeding function of the second wire feeder device, and causing the in-line wire feeding mechanism to take overfeeding of the electrode wire from the wire source.

## Description

### CLAIM OF PRIORITY

This patent application claims priority to and claims benefit from United States Provisional Patent Application Serial No. 63/454,518, filed on Mar. 24, 2023. The above identified applications is hereby incorporated herein by reference in its entirety.

### BACKGROUND

Welding has become increasingly ubiquitous. Welding can be performed in an automated manner or in a manual manner (e.g., being performed by a human). Equipment or components used during welding operations may be driven using engines. For example, engines may be used to drive, for example, generators, power sources, etc. used during welding operations.

Conventional welding-type setups and/or systems may have some limitations and/or disadvantages, however. For example, some welding-type setups and/or systems may restrict the lead distance between the main driving components with the location where the welding operation is performed.

Further limitations and disadvantages of conventional approaches will become apparent to one skilled in the art, through comparison of such approaches with some aspects of the present systems and methods set forth in the remainder of this disclosure with reference to the drawings.

### BRIEF SUMMARY

Aspects of the present disclosure relate to welding solutions. More specifically, various implementations in accordance with the present disclosure are directed to systems and methods for utilizing in-line wire feeders, substantially as illustrated by or described in connection with at least one of the figures, and as set forth more completely in the claims.

These and other advantages, aspects and novel features of the present disclosure, as well as details of an illustrated implementation thereof, will be more fully understood from the following description and drawings.

### BRIEF DESCRIPTION OF THE DRAWINGS

FIG. 1 shows an example welding-type setup that may be used for welding-type operations.
FIG. 1B shows an example metal inert gas (MIG) welding based setup that may be used for MIG based welding-type operations.
FIG. 1C illustrated alternative example arrangements for incorporating an in-line wire feeder.
FIG. 2 illustrates an example in-line wire feeder and use thereof in an example welding-type setup.
FIG. 3 illustrates an example in-line wire feeder and features associated therewith.
FIG. 4 illustrates an example in-line wire feeder and features associated therewith, particularly use of switching mechanism to enable providing user input directly to the in-line wire feeder.
FIG. 5 illustrates an example welding setup with an in-line wire feeder with a switch for controlling operation of the feeding mechanism in the in-line wire feeder and the external wire feeder in the power unit.

### DETAILED DESCRIPTION

As utilized herein, the terms "circuits" and "circuitry" refer to physical electronic components (e.g., hardware), and any software and/or firmware ("code") that may configure the hardware, be executed by the hardware, and/or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may operate, for example, on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic components (e.g., hardware) and any software and/or firmware ("code") that may configure the hardware, be executed by the hardware, and/or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not (e.g., by a user-configurable setting, factory trim, etc.).

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

Welding-type power, as used herein, refers to power suitable for welding, plasma cutting, induction heating, CAC-A (carbon arc cutting/air) and/or hot wire welding/preheating (including laser welding and laser cladding). Welding-type power supply, as used herein, refers to a power supply that can provide welding-type power. A welding-type power supply may include power generation components (e.g., engines, generators, etc.) and/or power conversion circuitry to convert primary power (e.g., engine-driven power generation, mains power, etc.) to welding-type power.

Welding-type operations, as used herein, comprise operations in accordance with any known welding technique, including flame welding techniques such as oxy-fuel welding, electric welding techniques such as shielded metal arc welding (e.g., stick welding), metal inert gas (MIG) welding, tungsten inert gas (TIG) welding, resistance welding, as well as gouging (e.g., carbon arc gouging), cutting (e.g., plasma cutting), brazing, induction heating, soldering, and/or the like.

Welding-type setup, as used herein, refers to any setup comprising welding related devices or equipment (e.g., welding power sources, welding torch, welding gear such as headwear and the like, auxiliary devices or systems, etc.) which are used in facilitating and/or in conjunction with welding-type operations.

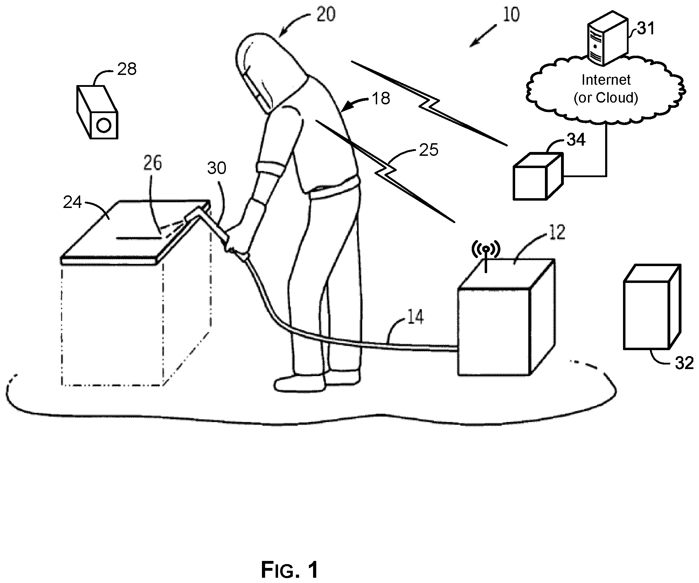

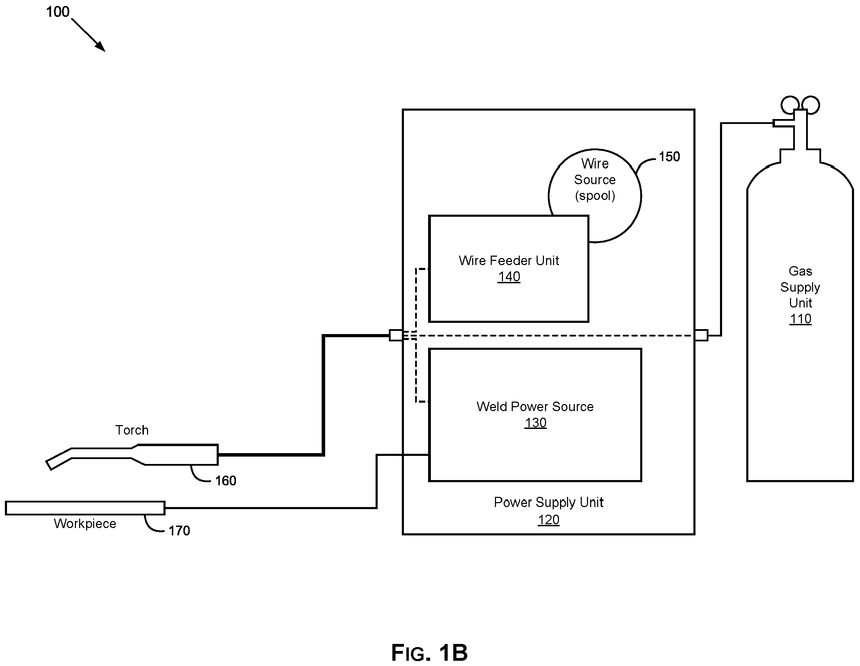

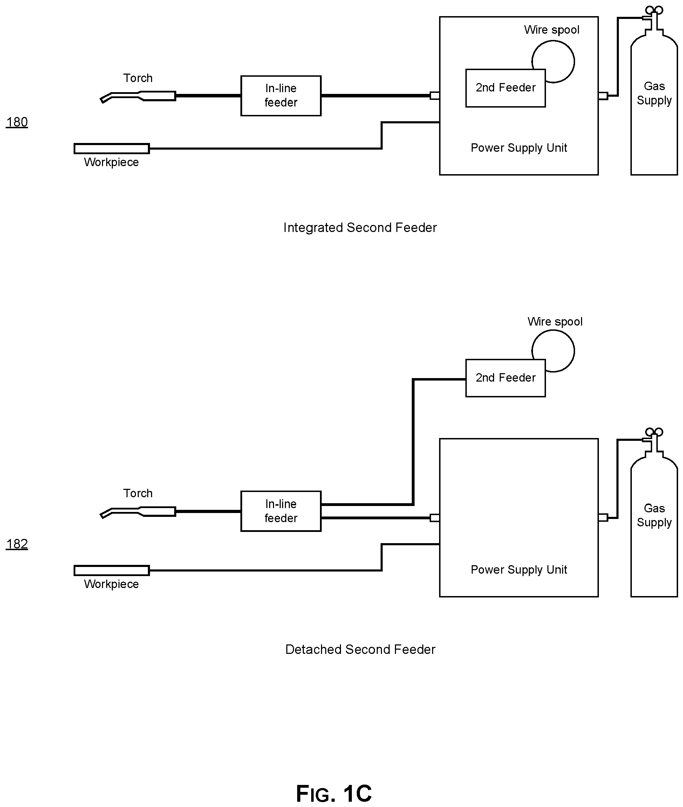

FIG. 1 shows an example welding-type setup that may be used for welding-type operations. Referring to FIG. 1, there is shown an example welding-type setup 10 in which an operator (user) 18 is wearing welding headwear 20 and welding a workpiece 24 using a torch 30 to which power is delivered by equipment 12 via a conduit 14, with weld monitoring equipment 28, which may be available for use in monitoring welding operations. The equipment 12 may comprise a power source, optionally a source of a shield gas and, where wire/filler material is to be provided automatically, a wire feeder. Further, in some instances an engine 32 may be used to drive equipment or components used during welding operations. The engine 32 may comprise a gas engine or a liquefied petroleum (LP) engine. The engine 32 may drive generators, power sources, etc. used during welding operations.

The welding-type setup 10 of FIG. 1 may be configured to form a weld joint by any known welding-type technique. For example, optionally in any implementation, the welding equipment 12 may be arc welding equipment that provides a direct current (DC) or alternating current (AC) to a consumable or non-consumable electrode of a torch 30. The electrode delivers the current to the point of welding on the workpiece 24. In the welding-type setup 10, the operator 18 controls the location and operation of the electrode by manipulating the torch 30 and triggering the starting and stopping of the current flow. In other implementations, a robot or automated fixture may control the position of the electrode and/or may send operating parameters or trigger commands to the welding system. When current is flowing, an arc 26 is developed between the electrode and the workpiece 24. The conduit 14 and the electrode thus deliver current and voltage sufficient to create the electric arc 26 between the electrode and the workpiece. The arc 26 locally melts the workpiece 24 and welding wire or rod supplied to the weld joint (the electrode in the case of a consumable electrode or a separate wire or rod in the case of a non-consumable electrode) at the point of welding between electrode and the workpiece 24, thereby forming a weld joint when the metal cools.

Optionally in any implementation, the weld monitoring equipment 28 may be used to monitor welding operations. The weld monitoring equipment 28 may be used to monitor various aspects of welding operations, particularly in real-time (that is as welding is taking place). For example, the weld monitoring equipment 28 may be operable to monitor arc characteristics such as length, current, voltage, frequency, variation, and instability. Data obtained from the weld monitoring may be used (e.g., by the operator 18 and/or by an automated quality control system) to ensure proper welding.

As shown, the equipment 12 and headwear 20 may communicate via a link 25 via which the headwear 20 may control settings of the equipment 12 and/or the equipment 12 may provide information about its settings to the headwear 20. Although a wireless link is shown, the link may be wireless, wired, or optical.

Optionally in any implementation, equipment or components used during welding operations may be driven using engines. For example, the engine 32 may drive generators, power sources, etc. used during welding operations. In some instances, it may be desired to obtain information relating to used engines. For example, data relating to engines (and operations thereof) used during welding operations may be collected and used (e.g., based on analysis thereof) in monitoring and optimizing operations of these engines. The collection and use of such data may be performed telematically-that is, the data may be collected locally, subjected to at least some processing locally (e.g., formatting, etc.), and then may be communicated to remote management entities (e.g., centralized management locations, engine providers, etc.), using wireless technologies (e.g., cellular, satellite, etc.).

Optionally in any implementation, a dedicated controller (e.g., shown as element 34 in FIG. 1) may be used to control, centralize, and/or optimize data handling operations. The controller 34 may comprise suitable circuitry, hardware, software, or any combination thereof for use in performing various aspects of the engine related data handling operations. For example, the controller 34 may be operable to interface with the engine 32 to obtain data related thereto. The controller 34 may track or obtain welding related data (e.g., from weld monitoring equipment 28, from equipment 12, etc.). The controller 34 may then transmit the data (e.g., both engine related and weld related data), such as to facilitate remote monitoring and/or management, by way of wireless communications. This may be done using cellular and or satellite telematics hardware, for example.

In some example implementations, welding-type systems or setups, such as the welding-type setup 10, may be configured for collecting and reporting data relating to welding-type operations and/or to functions or components utilized during welding-type operations. For example, data from welding processes, power sources, welding-related accessories etc. in a weld setup may be collected. In this regard, the collected data may comprise, for example, current, voltage, wire feed speed, weld states, and numerous other power source parameters and settings.

The collected data may then be sent to remote entities (e.g., a remote server 31, which may be a manufacturer-controlled, Internet-based cloud server) and/or to local systems or devices (e.g., local PC, a tablet, a smartphone, etc.). The collected data may be utilized in enhancing welding-related systems and/or operations. For example, manufacturers may utilize the collected data to identify issues (and correct them) and/or devise modifications or improvements in the various components. Further, users may be able to generate reports on collected data to measure, document, and improve their processes.

FIG. 1B shows an example metal inert gas (MIG) welding based setup that may be used for MIG based welding-type operations. Referring to FIG. 1B, there is shown an example welding-type setup 100. In this regard, the welding-type setup 100 represents an example metal inert gas (MIG) welding based implementation of the welding-type setup 10 of FIG. 1. In particular, in the simplified implementation depicted in FIG. 1B, the MIG based welding-type setup 100 comprises a gas supply unit 110, a power supply unit 120, and a welding torch (gun) 160. As shown, the power supply unit 120 comprises a weld power source 130, a wire feeder unit 140, and a wire source (e.g., wire spool) 150. Nonetheless, the disclosure is not limited to such arrangement, and as such, some of the components of the power supply unit 120 as shown in FIG. 1B-namely, the wire feeder unit 140 and/or the wire source 150-may be separate physical components.

In operation, the welding-type setup 100 may be used to apply MIG based welds, such to workpieces (e.g., workpiece 170 shown in FIG. 1B). In this regard, in MIG based welding, a consumable electrode wire is fed from the wire source 150, via the wire feeder unit 140, through the torch 160, as an electric arc is formed between the consumable electrode wire and the workpiece 170 as a current is supplied by the power supply unit 120 to both of the torch 160 and the workpiece 170, with the weld power source 130 providing that power, as well as providing power to other components of the power supply unit 120, such as to the wire feeder unit 140 to facilitate the wire feeding thereby. The arc heats the workpiece metal(s) and the consumable electrode wire, causing them to melt and join, forming the weld. Further, along with the wire electrode, a shielding gas is fed from the gas supply unit 110 through the torch 160, to shield the weld (e.g., from atmospheric contamination). In this regard, as illustrated in FIG. 1B a single connector between the power supply unit 120 and the welding torch (gun) 160 may be used to provide the electrode wire, the shielding gas, and power from the power supply unit 120 to the welding torch (gun) 160. Nonetheless, the disclosure is not limited to such design, and as such in some implementations separate dedicated connectors may be used providing one or more of the electrode wire, the shielding gas, and power.

Use of MIG based welding may be pose some challenges and/or may have some limitations, however. In this regard, one of the main limitations when using MIG based welding is the distance between the power source (e.g., the combination of the gas supply unit 110, the wire feeder unit 140, the power supply unit 120, and the wire source 150) and the work site-that is, where the weld is being applied, such as the location of the workpiece 170. In particular, one of the main limitations and/or challenges when using MIG guns is the maximum distance (or lead) from the work site to the power source that the user may move without needing to re-position the power source. The typical lead in the industry for a single drive system is ~10 ft. However, in many instances users may desire a longer lead on the gun; providing such longer lead may not be feasible in conventional setups, however.

For example, the challenge with providing longer gun lead is limiting what wire diameter that can be pushed through longer lead, which may increase the friction between the liner and the wire. Such increased friction may force the users to increase the tension on the drive roll. However, the increased tension may in turn cause some issues. For example, the increased tension may deform the wire cross section. Also, with the increase friction and tension may cause the wire to collapse and start nesting inside the drive compartment. In addition, the wire material may affect the lead distance, and thus may be another limiting factor. For example, achieving longer leads with aluminum based wires may be particularly challenging because of the limited column strength of aluminum. In this regard, the column strength of aluminum may limit how much aluminum wire can be pushed-e.g., allowing for only a short lead distance before issues may occur, such as the aluminum wire binding up inside with the liner.

Some solutions have been developed to address this issue. One such solution is the spool gun, which incorporate a wire source (e.g., 4 inch spool) and wire feed mechanism) attached directly to the gun. Another solution that have been utilized is the push-pull gun which pull the wire out from the power source and pushes it through the gun. Both of these approaches and designs have challenges, however. For example, the spool gun is typically very big and bulky, and may have wire feeding issues, such as with particular wire material (e.g., aluminum) that may cause the wire to bind up in the liner, so there are maintenance concerns when operating them. Also, use of spool guns may be challenging and undesirable due to the strain use of such gun may have on the user (e.g., causing strain on the user's wrist). In addition, size and shape of the spool gun also limits the user from getting into tight spaces. While the push-pull gun may be lighter and smaller in size, it is very expensive and it imposes strict operation requirements-e.g., the feeding mechanism/components (e.g., motors) in the two devices (the push-pull gun and the supply unit) have to be synchronized and must operate in harmony to ensure proper feeding of the wire since the push-pull gun needs to pull the wire from the power supply unit and then push it in synchronized manner (e.g., the motors must operate at the same rate of speed, to prevent jamming).

Solutions based on the present disclosure address some of the challenges of existing welding systems, particularly with respect to short leads, while overcoming the limitations of any existing conventional solutions. In particular, solutions based on the present disclosure may allow for increasing leads during welding operations, particularly by use of a separate wire feeder (referred to as "in-line wire feeder") configured to optimize performance. In this regard, in-line wire feeders based on the present disclosure may enable addressing issues relating to or limitations on distance between the worksite to power supply, particularly by separating the wire feeding mechanism from the power source, to enable moving the wire feeding mechanism closer to the worksite, thus extending the overall distance between the worksite to power supply.

In various example implementations based on the present disclosure, an in-line wire feeder may be provided as a separate physical device, which may incorporate a wire feeding mechanism, along with additional components and/or features that may be needed for supporting operation thereof, with such in-line wire feeders being configured for use as separate device in suitable welding-type setups, to provide longer leads. In particular, the in-line wire feeder may be configured to connect to gas, wire, and power sources on one end, such as via first-side connecter(s), and to connect to a torch (e.g., MIG gun) on the other end, such as via second-side connector(s), thus allowing for greater distances between the torch and the power supply than is possible in conventional setups. For example, the in-line wire feeder may be placed at first distance (e.g., up to ~20 ft.) away from a power supply unit, and the user may then add another, second distance (e.g., up to -10-12 ft.) from the torch (e.g., MIG gun) to the in-line wire feeder, thus extending the overall reach while still pulling the electrode wire out of power supply unit (or wire source).

Accordingly, the in-line wire feeder may be used as an accessory device that may work with, and be plugged into existing power supply equipment. The electrode wire then may be routed through the wire feeder at the power supply equipment, with the wire feeding mechanism in the in-line wire feeder handling the feeding the wire to the torch. In this regard, the in-line wire feeder may be configured to work in conjunction with a wire feeder (referred to as "second wire feeder device" or "second wire feeder") that provides the wire feeding functions in conventional designs (e.g., the wire feeder integrated into the power supply unit, or a detached wire feeder that is used with the power supply unit). Example arrangements are illustrated and described with respect to FIG. 1C. When the torch (MIG gun) is plugged into the in-line wire feeder, and the wire feeding motor internal to the power supply may be disconnected or deactivated, with the wire feeding continues instead using the trigger of the MIG gun and feeding mechanism in the in-line wire feeder. Alternatively, use of the in-line wire feeders as described herein may allow for eliminating wire feeder drive component in the power supply equipment. For example, with reference to the welding-type setup 100 of FIG. 1B, an in-line wire feeder may be connected between the torch 160 and the power supply unit 120, or (alternatively) the wire-feed unit 140 may be separated from the remaining part of the power supply in the welding-type setup 100-that is, the wire source 150, the power supply unit 120, and the gas supply unit 110-and moved placed closer to the worksite.

In some example implementations, the in-line wire feeder may be designed or configured such that it to be carried by or otherwise be attached to the user (or a piece of equipment or clothing used by the user). For example, the in-line wire feeder may incorporate holstering or strapping components (e.g., shoulder harness, belt, etc.), or may be configured (e.g., by incorporating suitable attachment features) such that may be attached to separate holster or strapping systems and/or to engage existing holster or strapping systems (e.g., tool belts) that users may already be using. Carrying or holstering the in-line wire feeder may be done in conjunction with use of a shorter gun, which may allow the user to push alternate material like aluminum or smaller diameter steel wire. Nonetheless, it should be understood that the disclosure is not limited to such approach, and as such in some implementations the in-line wire feeder(s) instead may be configured to be placed off of the user's body-e.g., simply placed on the ground/floor, or may be configured such that they may be attached or secured to something else, such as a fixed structure or object (e.g., a dedicated stand, or any available structure or object, such as a desk or a railing) near the worksite.

In some example implementations, the in-line wire feeder may incorporate features or components to allow mounting it or otherwise attaching to existing structures (e.g., using magnetic mechanism, such as to a table, railing, etc.). For example, the in-line wire feeder may incorporate strap mounts or hook-like parts that enable the user to mount the in-line wire feeder off the floor. Where configured to be attached to or holstered, the in-line wire feeder(s) may be configured such that it would allow the user to easily detach the in-line wire feeder(s). The attaching mechanism may also be configured to optimize or enhance operation. For example, the holster or strapping system may be configured such that it may rotatable and repositionable. The holster or strapping system also may be configured or designed to limit the reduction in the bend radius. Such bend radius may be desirable as a tighter bend radius could result in difficulty of feeding the wire.

In some example implementations, separate connectors may be used for power, gas, and wire, such as to enable use of separate wire source that may be connected directly via dedicated connector, with the power supply unit providing only power (and optionally gas) and thus omits the wire feeding therefrom.

In some example implementations, the in-line wire feeder may incorporate controls (e.g., suitable input means), which allows the user to control the wire feeding. The in-line wire feeder may also incorporate a transparent section to allow the user to see the wire as it emerges into the in-line wire feeder. In an example implementation, the in-line wire feeder may incorporate an input device configured to receive user input. The input device may provide, based on the user input, control input for controlling, at least in part, one or both of the feeding of the wire and the feeding mechanism in the in-line wire feeder. The input device may be configured to provide, based on the user input, control input for adjusting feeding speed related parameters. In an example implementation, the input device may be a switch (e.g., momentary switch) that controls one or both of the second wire feeder device and the in-line wire feeding mechanism, with the controlling including, while the switch is pressed or otherwise activated, deactivating the in-line wire feeding mechanism and activating the feeding function of the external (second) wire feeder device.

In some example implementations, the in-line wire feeder may incorporate a speed regulating component, which may be configured to adjust feeding speed related parameters of the in-line wire feeding mechanism. This may be done by, e.g., adjusting gear ratios wire feeding mechanism in the in-line wire feeder. Use of such speed regulating component, and functions performed thereby, may be advantageous to ensure that the in-line wire feeder may be simulate operation of a gun (e.g., spool gun)-that is, to ensure that the feeding speed applied at the in-line wire feeder matches the feeding speed when using existing guns.

In some example implementations, an alternate design may be used, with configurable in-line wire feeder(s). This may be done to allow a user to choose a wire source (e.g., wire spool) that may be integrated with the wire drive/feeding mechanism in the in-line wire feeder, attach the wire source as a separate element in the system, or keep the wire source internal to the power source.

Accordingly, solutions based on the present disclosure, and systems associated therewith, may have various advantages over conventional solutions (if any existed). In particular, the proposed solutions and systems associated therewith, incorporating separate in-line wire feeders as described herein, allow for extended lead length with reduced concern of pushing thinner gauge wire or softer material. Further, the proposed solutions and systems associated therewith allow for use of existing torches (MIG guns), which in turn allows for and ensures light weight on wrist, which would be advantageous to the users. The proposed solutions and systems associated therewith also have the advantage of allowing for (re-)use of common consumables of existing MIG guns. The proposed solutions and systems associated therewith may also allow for improved operation due to the system's light weight and flexibility of use, thus allowing for welding in tighter areas and/or confined spaces. The proposed solutions and systems associated therewith may provide enclosure with optimal characteristics-e.g., the shape and/or material used for enclosure may allow for handling the wire drive system in manner to may be preferable by users, as the wire drive system may laid on the floor, dragged, rolled with ease, and/or oriented to minimize the cable bend for improved feeding. The proposed solutions and systems associated therewith may also be backwards compatible with existing, welding related systems.

Another advantage that the proposed solutions and systems associated therewith may offer is ease of setting up the system for operation. In this regard, in conventional systems, such as those that use MIG guns, the machine (e.g., power supply unit) may be configured to (e.g., by operating in a certain mode) feed out a certain length of wire (e.g., ~10 ft.) and then the machine stops till welding commences. This require holding the line straight to prevent binding up in the line. Once the welding start, the wire feeder in the machine operate to continually feed the wire, and with spool gun based setups, the motor of the wire feeder in the machine must operate in synchronized manner with the motor of the spool gun. In proposed solutions and systems associated therewith, however, the in-line wire feeder activates (e.g., in response to input by the user at the in-line wire feeder) the feeding from machine (or whichever wire source is used), to feed the wire all the way to the in-line wire feeder, and then after the gun (torch) is attached to the in-line wire feeder, the wire may be fed from the in-line wire feeder into the gun when needed, with the in-line wire feeder controlling the feeding from the wire source), with the wire feeder in the machine remaining deactivated. So there's a handoff that takes place when using the proposed the in-line wire feeders. This is explained in more details below.

In various implementations, physical attributes of the in-line wire feeder may be selected or adjusted to optimized or enhance operation and/or use thereof. On such physical attribute is shape of the in-line wire feeder. For example, as illustrated in various example implementation depicted herein, the in-line wire feeder may have smooth, football (oval) shape. Such shape may offer various benefits and/or advantages. For example, one advantage of this shape is having a single point of contact with the floor, which makes it easy to drag the in-line wire feeder. Another advantage is that the smooth shape also allows for pull over other obstacles (e.g., cords or the like) which may be laying on the floor. Nonetheless, it should be assumed that the disclosure is limited the shape(s) illustrated in the accompanying figures, and a person of ordinary skill in art should appreciate that any suitable shape (or size) may be used.

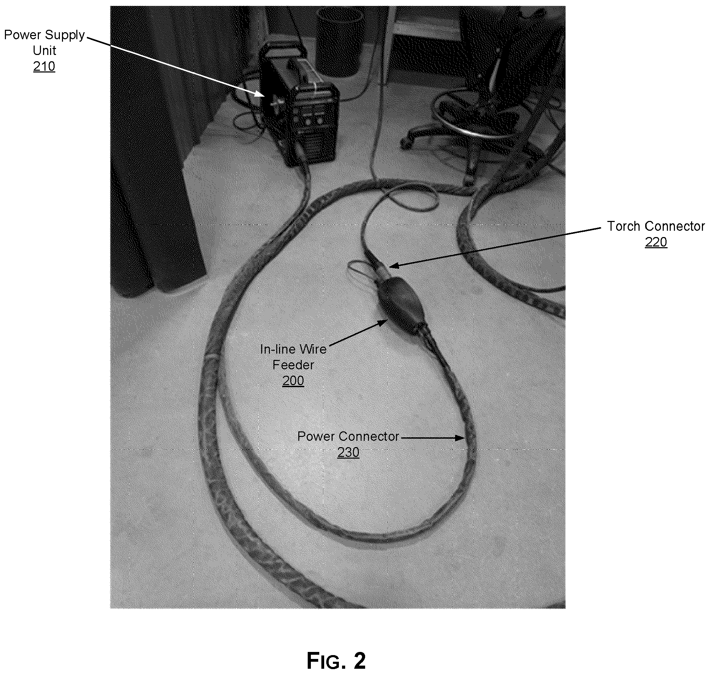

Example implementation(s) based on the present disclosure and additional details related thereto are described in more detail below with respect to FIGS. 2-4.

FIG. 1C illustrated alternative example arrangements for incorporating an in-line wire feeder. Referring to FIG. 1C, there are shown example welding-type setups 180 and 182, which represent modified arrangement of the welding-type setup 100 to incorporate use of an in-line wire feeder implemented based on the present disclosure, as described herein. In this regard, the setup 180 illustrates use of an in-line wire feeder in conjunction with an integrated second wire feeder-that is, where the second (external) wire feeder (and the wire source-e.g., wire spool) is integrated within the power supply unit. The setup 180 illustrates use of an in-line wire feeder in conjunction with a detached (external) second wire feeder-that is, where the second (external) wire feeder (and the wire source-e.g., wire spool) is separate from and externa to the power supply unit that is used to provide power and/or shielding gas to the in-line wire feeder.

FIG. 2 illustrates an example in-line wire feeder and use thereof in an example welding-type setup. Referring to FIG. 2, there is shown an example in-line wire feeder 200 that is incorporated into a MIG based welding-type setup.

The in-line wire feeder 200 may be configured to provide wire feed during welding-type operations, particularly MIG based welding, and to do so in accordance with the present disclosure such that it may allow for longer leads while overcoming the limitations of any existing conventional solutions. In this regard, as illustrated in FIG. 2, the in-line wire feeder 200 may be implemented as a separate physical device, comprising a wire feeding system (e.g., components similar and/or equivalent to the wire feeder unit 140 in the welding-type setup 100), and may be configured to support being connected to a power supply unit 210 (e.g., comprising components similar and/or equivalent to the combination of the power supply unit 120 and (optionally) the gas supply unit 110 in the welding-type setup 100) at one end, such as via one or more first-side connectors (e.g., the power connector 230), and to a torch (not shown, e.g., a MIG gun) at other end, such as via one or more second-side connectors (e.g., torch connector 220), thus allowing for greater distances between the torch and the power supply than is possible in conventional setups, as described herein.

To that end, the in-line wire feeder 200 may incorporate one or more first-side ports or outlets, configured to receive or otherwise engage the one or more first-side connectors, and one or more second-side ports or outlets, configured to receive or otherwise engage the one or more second-side connectors. In this regard, the power connector 230 may be used to feed the electrode wire, as well as power and gas, from the power supply unit 210 to the inline wire feeder 200, and the torch connector 220 may enable feeding the electrode wire, as well as (optionally) power and gas, from the in-line wire feeder 200 into the torch. In this regard, any suitable connector may be used. For example, the power connector 230 may be conventional spool gun connectors (thus allowing for backward compatibility with existing power supply units), since the in-line wire feeder 200 may generally operate in similar manner as spool gun may operate (though the control of feeding may be adjusted, as described herein), and as such may be connected to and handled by the power supply unit 210 as if it was a spool gun.

In some example implementations, an alternate design may be used, with the wire being fed from separate and/or auxiliary wire source (e.g., wire spool) used, which may be fed via separate and/or auxiliary wire feeder, and as such the in-line wire feeder 200 may incorporate means to enabling connecting such auxiliary wire feeder/source directly, such as via a separate connector. Such designs may require use of additional components, such as a suitable connector/receptor and (optionally) separate control circuit(s) in the in-line wire feeder to manage interactions with such wire sources, but would allow the system to be independent with respect to the wire source required thereby.

Further, in some implementations, an alternate design may be used, with power required to operate the proposed in-line wire feeders (e.g., to run motor(s) used therein) being obtained from separate and/or auxiliary power sources. In this regard, while in some of the embodiment shown and described with respect to FIG. 2 (and the other figures) the proposed in-line wire feeders are powered by the power supply unit (e.g., via the power connector 230), the disclosure is not limited to such designs, and as such in some implementations, the in-line wire feeder can be powered separately, such as via power connector to an outlet or other suitable power source in the area. Such designs may require use of additional components, such as a power connector/receptor and separate power control circuit(s) in the in-line wire feeder, but would allow the system to be independent with respect to the power supply required thereby, and thus resolve backward compatibility concerns.

In some implementations, the in-line wire feeder may be configured to provide wire based on control input. For example, the in-line wire feeder may receive motor speed control. In this regard, in the welding process, the delivery of the filler metal (e.g., welding wire) may need to be performed in a controlled manner dependent upon, e.g., the particular weld process, work piece thickness, etc. Such control may be, e.g., in the form of the speed at which the wire is fed. One example of such control input is wire feed speed (WFS). In this regard, WFS is a function of the wire feed motor speed, which is dependent upon the voltage supplied to the armature of the motor.

For example, the in-line wire feeder (e.g., the in-line wire feeder 200) may be configured to receive the motor control voltage from a WFS control circuit in the welding power supply (e.g., welding power supply 210). The motor control voltage may be delivered using existing or dedicated connectors or cables in the welding-type system or setup. For example, the voltage may be delivered by two of four control wires that are connected to the welding power supply via a 4-pin connector and are coaxially embedded in the power cable (e.g., the power connector 230) that goes back to the welding power supply. The other two wires may be used for other control input, such as the gun trigger. In this regard, the other two wires in such 4-wire arrangement, may be used as the gun trigger signal leads, which carry the signal(s) for enabling/disabling the welder power output. The trigger signal from the welding gun trigger may be passed through these leads to the welding power supply. The welding gun trigger is connected to the 4-pin torch-side connector, as shown Figs. 2-4. With such control scheme, the WFS control is set at the welder and is transmitted to the motor armature in the feeder.

However, the disclosure is not limited to such implementation for motor control scheme, and any other suitable implementation may be used. For example, in an alternate implementation of the motor control scheme a motor control circuit may be added, such as in the feeder itself, so that the WFS may be controlled remotely. However, such implementation would require the addition of control circuitry and a WFS knob on the feeder. The motor control would be set at maximum at the power source and the control in the feeder would attenuate it to the desired level.

In another alternate implementation full motor control functionality may be incorporated and/or built into the feeder, with that full motor control functionality powered from, e.g., the welding arc. Such scheme would provide a full remote control of the WFS that wouldn't be dependent on the setting of the WFS at the welder. Such scheme would also enable the feeder to be used on welders that don't have the typical spool gun style of control (e.g., via the 4-pin connector as described above). Such scheme may particularly adaptable for use in welding-type systems or setup that are driven using batteries (or similar power storage devices), and/or which may not have an internal wire feed speed control.

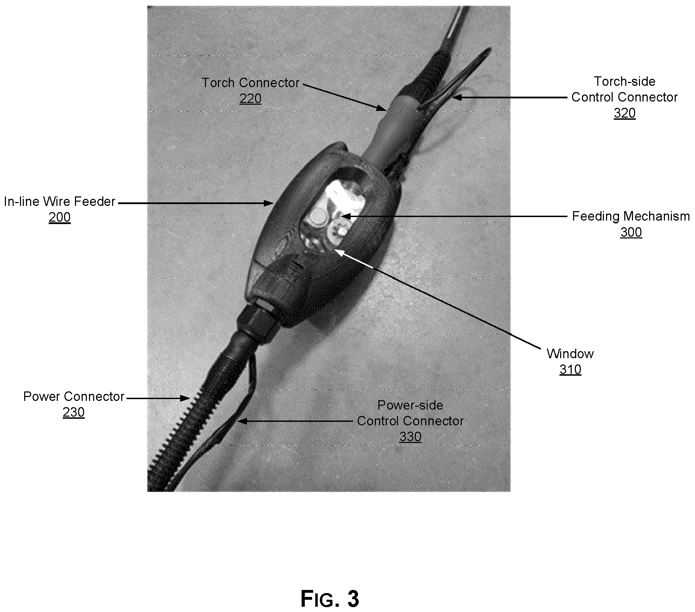

FIG. 3 illustrates an example in-line wire feeder and features associated therewith. Referring to FIG. 3, there is shown the in-line wire feeder 200 described with respect to FIG. 2. In this regard, illustrated in FIG. 3 are some of the features and/or component of the in-line wire feeder 200 in accordance with an example embodiment thereof.

In particular, the in-line wire feeder 200 may incorporate a transparent cover (window) 310 which exposes the interior of the in-line wire feeder 200, thus showing a feeding mechanism 300 that feeds into the torch (not shown) via the torch connector 220. This may be advantageous as it would allow the user to detect issues that may occur within the in-line wire feeders (e.g., nesting). Further, while not shown in FIG. 3, the side incorporating the window (or another side) of the in-line wire feeder may incorporate a removable cover to enable accessing the interior of the in-line wire feeder, particularly the wire feeding mechanism 300 (e.g., to resolve such issues as jamming or the like). Also shown in FIG. 3 are the torch connector 220 and the power connector 230, which connect the in-line wire feeder 200 to, respectively, the torch (not shown) and the power supply unit 210.

In addition, other connectors may be used. For example, as shown in FIG.3, a torch-side control connector 320 may be used, being plugged into or otherwise coupled to the in-line wire feeder 200, such as control messaging and/or data may exchange with the torch, such as to enable controlling the feeding mechanism 300 (e.g., based on user input at the torch, which may be communicated to the in-line wire feeder 200 via the torch-side control connector 320). Similarly, power-side control connector 330 may be used, being plugged into or otherwise coupled to the in-line wire feeder 200, such as control messaging and/or data may exchange with the power supply unit 210, to enable controlling the feeding mechanism 300.

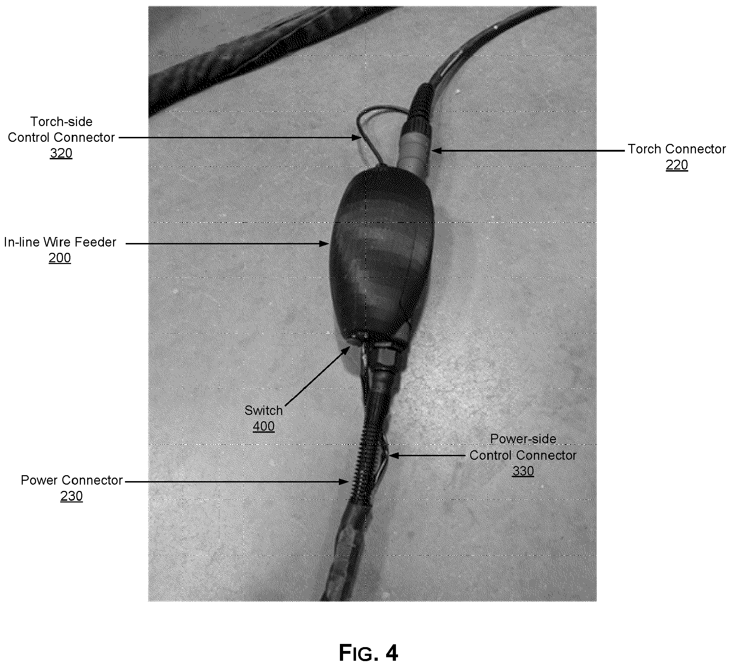

FIG. 4 illustrates an example in-line wire feeder and features associated therewith, particularly use of switching mechanism to enable providing user input directly to the in-line wire feeder. Referring to FIG. 4, there is shown the in-line wire feeder 200 described with respect to FIGS. 2-3. Illustrated in FIG. 4 are additionally features and/or component of the in-line wire feeder 200 in accordance with an example embodiment thereof, particularly a switch 400 that may be incorporated thereto. In this regard, the switch 400 may be used to activate, e.g., in response to pressing thereof by the user, the feeding mechanism 300 of the in-line wire feeder 200, such as after plugging the connectors (e.g., the torch connector 210, power connector 230, etc.), to initiate feeding the electrode wire from the power supply unit 210 into the in-line wire feeder 200, and then to the torch.

In an example use scenario, the in-line wire feeder 200 may be connected to the torch (MIG gun), with the torch connector 220 plugged into or otherwise coupled to corresponding suitable receptor in the in-line wire feeder 200, and the torch-side control connector 320 similarly may be plugged into or otherwise coupled to corresponding suitable receptor in the in-line wire feeder 200. In this regard, as noted, the torch-side control connector 320 may communicate to the in-line wire feeder 200 user inputs or commands (or corresponding data) from the torch, such as in response to the user providing commands or input at the torch-e.g., via a trigger mechanism, button(s), or the like. Such communication may enable conveying information pertinent to setting or adjusting the wire feeding operations, such as the feed speed. For example, the torch-side control connector 320 may enable operating the torch as if it is a spool gun.

The in-line wire feeder 200 is also connected, on the other end, to the power supply unit 210, with the power connector 230 plugged into or otherwise coupled to corresponding suitable receptor in the in-line wire feeder 200, and the power-side control connector 330 similarly may be plugged into or otherwise coupled to corresponding suitable receptor in the in-line wire feeder 200. In this regard, the power-side control connector 330 may enable connecting the in-line wire feeder 200 to the power supply unit 210 to enable communication of control messages or data between the in-line wire feeder 200 to the power supply unit 210, particularly control messages and/or data pertaining to or otherwise affecting wire feeding related functions.

Once connected to both of the torch and the power supply unit 210, welding operating may commence. In this regard, as noted, the in-line wire feeder 200 may be carried or worn by the user in some instances. To that end, as noted additional systems (e.g., holstering system) may be used, such in conjunction with features or components of the in-line wire feeder 200 itself. Alternatively, the in-line wire feeder 200 may be secured to a fixed structure or object (e.g., railing or the like), or may simply be laid on the floor, as shown in FIG. 2.

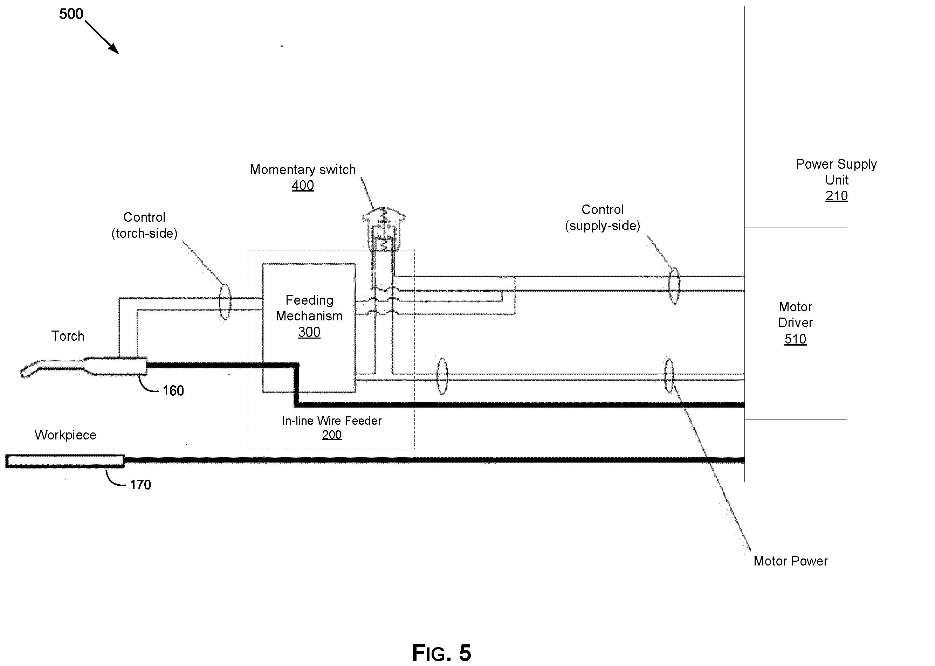

FIG. 5 illustrates an example welding setup with an in-line wire feeder with a switch for controlling operation of the feeding mechanism in the in-line wire feeder and the external wire feeder. Referring to Fig. 5, there is shown a welding-type (e.g., MIG based) setup 500 comprising the in-line wire feeder 200, the power supply unit 210, the torch 150, and the workpiece 160, as described herein.

In this regard, illustrated in FIG. 5 is of control of feeding functions in the welding-type setup 500 when using the in-line wire feeder 200, and particularly in conjunction with use of the switch 400. In particular, as shown in FIG. 5 the welding-type setup 500 corresponds to an example embodiment based on use of a momentary switch. Control communication in the welding-type setup 500, insofar as pertaining to operation of the in-line wire feeder, may be done simply based on flow (or not) of current in the control wires between the various components as shown in FIG. 5. Nonetheless, as noted above, the disclosure is not limited to such design, and as such in some instances control communication (e.g., between the in-line wire feeder and the machine) can be done in other ways, such as based on voltage, using digital signals, etc.

As shown, only one control trigger is used for controlling both the in-line wire feeder and the external wire feeder (e.g., the internal motor or the spool machine). The control may be based on detection of whether there is current flowing in the gun or not during normal operation of the in-line wire feeder. During initial set up of the system, the switch may be pressed, which will cause the switch to disconnect the feeding mechanism in the in-line wire feeder, thus simulate a "no gun present" condition, while keeping the internal wire motor in the machine active, thus causing it to feed the wire, and to continue doing so as long as the switch is pressed-however, since there is "no gun present" condition, the internal wire motor will stop pushing wire once it gets to the in-line wire feeder (particularly the internal feeding mechanism there). Once the switch is released, the internal wire motor is deactivated, and the in-line wire feeder takes over control of the wire feeding. When the trigger on the gun is pressed (applied), the current will flow through the control lines, and the in-line wire feeder will detect the activation of the trigger, and the internal feeding mechanism in the in-line wire feeder will be activated and feed wire to the gun, pulling it from the remote wire source.

Other implementations in accordance with the present disclosure may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various implementations in accordance with the present disclosure may be realized in hardware, software, or a combination of hardware and software. The present disclosure may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip.

Various implementations in accordance with the present disclosure may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present disclosure has been described with reference to certain implementations, it will be understood by those skilled in the art that various changes may be made and equivalents may be substituted without departing from the scope of the present disclosure. For example, block and/or components of disclosed examples may be combined, divided, re-arranged, and/or otherwise modified. In addition, many modifications may be made to adapt a particular situation or material to the teachings of the present disclosure without departing from its scope. Therefore, it is intended that the present disclosure not be limited to the particular implementation disclosed, but that the present disclosure will include all implementations falling within the scope of the appended claims.
Certain embodiments of the invention are described in the following clauses:
Clause 1. A welding-type system, comprising:
   an in-line wire feeder device configured for operation in conjunction with a welding-type torch and a second wire feeder device configured to feed electrode wire from a wire source;
   wherein the in-line wire feeder device is a physically separate component from both of the second wire feeder device and the welding-type torch;
   wherein the in-line wire feeder device comprises, at least, an in-line wire feeding mechanism configured to feed the electrode wire to the welding-type torch;
   wherein the in-line wire feeder device is connected in series with the second wire feeder device; and
   wherein the in-line wire feeder device controls feeding of the electrode wire from the wire source, the controlling comprising, at least:
      causing the second wire feeder device to feed the electrode wire from the wire source until the electrode wire reaches the in-line wire feeding mechanism; and
      after the electrode wire reaches the in-line wire feeding mechanism:
         deactivating at least a feeding function of the second wire feeder device, and
         causing the in-line wire feeding mechanism to take over the feeding of the electrode wire from the wire source.
Clause 2. The welding-type system according to clause 1, wherein the in-line wire feeder device comprises an input device configured to receive user input.
Clause 3. The welding-type system according to clause 2, wherein the input device is configured to provide, based on the user input, control input for controlling, at least in part, one or both of the feeding of the electrode wire and the in-line wire feeding mechanism.
Clause 4. The welding-type system according to clause 3, wherein the input device comprises a switch that controls one or both of the second wire feeder device and the in-line wire feeding mechanism.
Clause 5. The welding-type system according to clause 4, wherein the controlling comprises, while the switch is pressed or otherwise activated, deactivating the in-line wire feeding mechanism and activating the feeding function of the second wire feeder device.
Clause 6. The welding-type system according to clause 3, wherein the input device is configured to provide, based on the user input, control input for adjusting feeding speed related parameters.
Clause 7. The welding-type system according to clause 1, wherein the in-line wire feeder further comprises a speed regulating component configured to adjust feeding speed related parameters of the in-line wire feeding mechanism.
Clause 8. The welding-type system according to clause 1, wherein the in-line wire feeder is configured to control the feeding of the electrode wire from the wire source based on control input received from the welding-type torch.
Clause 9. The welding-type system according to clause 1, wherein the in-line wire feeding mechanism is deactivated while the second wire feeder device is feeding the electrode wire until reaching the in-line wire feeding mechanism.
Clause 10. The welding-type system according to clause 1, wherein the in-line wire feeder device is powered by an external power source in proximity to the in-line wire feeder device.
Clause 11. The welding-type system according to clause 10, wherein the external power source comprises a welding-type power supply unit.
Clause 12. The welding-type system according to clause 11, wherein the welding-type power supply unit comprises one or both of the second wire feeder device and the wire source.
Clause 13. The welding-type system according to clause 1, wherein the in-line wire feeder device is configured for attaching or mounting to a user of the welding-type system, or to a fixed structure or object.
Clause 14. The welding-type system according to clause 13, wherein the in-line wire feeder device comprises an attachment component configured to facilitating the attaching or mounting of the in-line wire feeder device.
Clause 15. The welding-type system according to clause 14, wherein the in-line wire feeder device comprises a holstering or strapping system configured for enabling carrying the in-line wire feeder device.
Clause 16. The welding-type system according to clause 1, wherein the in-line wire feeder device comprises a transparent section configured to enable viewing at least a portion of the in-line wire feeding mechanism.
Clause 17. The welding-type system according to clause 1, wherein the welding-type system comprises a metal inert gas (MIG) welding based system.
Clause 18. The welding-type system according to clause 1, wherein the welding-type torch comprises a MIG gun.
Clause 19. The welding-type system according to clause 1, wherein the in-line wire feeder device is connected to the second wire feeder device via a gun based connector.
Clause 20. The welding-type system according to clause 1, wherein the in-line wire feeder device further comprises one or more ports configured for engaging one or more connectors, for connecting the in-line wire feeder device to at least one of the second wire feeder device, the welding-type torch, and an auxiliary device or source.

## Claims

1. A welding-type system, comprising:
an in-line wire feeder device configured for operation in conjunction with a welding-type torch and a second wire feeder device configured to feed electrode wire from a wire source;
wherein the in-line wire feeder device is a physically separate component from both of the second wire feeder device and the welding-type torch;
wherein the in-line wire feeder device comprises, at least, an in-line wire feeding mechanism configured to feed the electrode wire to the welding-type torch;
wherein the in-line wire feeder device is connected in series with the second wire feeder device; and
wherein the in-line wire feeder device controls feeding of the electrode wire from the wire source, the controlling comprising, at least:
causing the second wire feeder device to feed the electrode wire from the wire source until the electrode wire reaches the in-line wire feeding mechanism; and
after the electrode wire reaches the in-line wire feeding mechanism:
deactivating at least a feeding function of the second wire feeder device, and
causing the in-line wire feeding mechanism to take over the feeding of the electrode wire from the wire source.

2. The welding-type system according to claim 1, wherein the in-line wire feeder device comprises an input device configured to receive user input.

3. The welding-type system according to claim 2, wherein the input device is configured to provide, based on the user input, control input for controlling, at least in part, one or both of the feeding of the electrode wire and the in-line wire feeding mechanism.

4. The welding-type system according to claim 3, wherein the input device comprises a switch that controls one or both of the second wire feeder device and the in-line wire feeding mechanism, and optionally wherein the controlling comprises, while the switch is pressed or otherwise activated, deactivating the in-line wire feeding mechanism and activating the feeding function of the second wire feeder device.

5. The welding-type system according to claim 3, wherein the input device is configured to provide, based on the user input, control input for adjusting feeding speed related parameters.

6. The welding-type system according to claim 1, wherein the in-line wire feeder further comprises a speed regulating component configured to adjust feeding speed related parameters of the in-line wire feeding mechanism.

7. The welding-type system according to claim 1, wherein the in-line wire feeder is configured to control the feeding of the electrode wire from the wire source based on control input received from the welding-type torch.

8. The welding-type system according to claim 1, wherein the in-line wire feeding mechanism is deactivated while the second wire feeder device is feeding the electrode wire until reaching the in-line wire feeding mechanism.

9. The welding-type system according to claim 1, wherein the in-line wire feeder device is powered by an external power source in proximity to the in-line wire feeder device.

10. The welding-type system according to claim 9, wherein the external power source comprises a welding-type power supply unit, and optionally wherein the welding-type power supply unit comprises one or both of the second wire feeder device and the wire source.

11. The welding-type system according to claim 1, wherein the in-line wire feeder device is configured for attaching or mounting to a user of the welding-type system, or to a fixed structure or object.

12. The welding-type system according to claim 11, wherein the in-line wire feeder device comprises an attachment component configured to facilitating the attaching or mounting of the in-line wire feeder device, and optionally wherein the in-line wire feeder device comprises a holstering or strapping system configured for enabling carrying the in-line wire feeder device.

13. The welding-type system according to claim 1, wherein the in-line wire feeder device comprises a transparent section configured to enable viewing at least a portion of the in-line wire feeding mechanism.

14. The welding-type system according to claim 1, wherein the welding-type system comprises a metal inert gas (MIG) welding based system, or wherein the welding-type torch comprises a MIG gun.

15. The welding-type system according to claim 1, wherein the in-line wire feeder device is connected to the second wire feeder device via a gun based connector, or wherein the in-line wire feeder device further comprises one or more ports configured for engaging one or more connectors, for connecting the in-line wire feeder device to at least one of the second wire feeder device, the welding-type torch, and an auxiliary device or source.
